# EUROPEAN PATENT APPLICATION

(11) **EP 4 369 856 A1**
(43) Date of publication of application: **15.05.2024**
(21) Application number: 23209149.6
(22) Date of filing: 10.11.2023
(51) Int. Cl.: H04W 84/12

(54) **SYSTEM FOR AND METHOD FOR MULTI-LINK WIRELESS CONNECTIONS**

(30) Priority: 12.11.2022 IN 202221064891; 26.04.2023 US 202318307438
(71) Applicant: Avago Technologies International Sales Pte. Limited, Singapore 768923 (SG)
(72) Inventor: VERMA, Sindhu, Bangalore (IN); ADHIKARI, Shubhodeep, Bangalore (IN); FISCHER, Matthew J., Mountain View (US); ERCEG, Vinko, Carlsbad (US); GAIKWAD, Rohit V., San Diego (US)
(74) Representative: Dilg, Haeusler, Schindelmann Patentanwaltsgesellschaft mbH

(57) **Abstract**

A device can include a first radio configured to transmit over a first link and a second link of a first wireless band. The first radio can be configured to detect an OBSS communication on the first link of the first wireless band. The first radio can be configured to transmit over the second link of the first wireless band, responsive to the detection of the OBSS communication on the first link of the first wireless band. The device can be configured to operate as an access point (AP) for one or more stations of a wireless network.

## Description

### Cross-Reference to Related Application

The present application claims priority to Indian Provisional Patent Application No. 2022-21064891, filed on 12 November 2022 and U.S. Patent Application No. 18/307,438 filed on 26 April 2023, the entire contents of which are incorporated by reference in their entirety.

### Field of the Disclosure

This disclosure generally relates to systems and methods for communication between a station (STA) and access point (AP) or between other communication devices.

### Background of the Disclosure

In the last few decades, the market for wireless communications devices has grown by orders of magnitude, fueled by the use of portable devices, and increased connectivity and data transfer between all manners of devices. Digital switching techniques have facilitated the large scale deployment of affordable, easy-to-use wireless communication networks. Furthermore, digital and radio frequency (RF) circuit fabrication improvements, as well as advances in circuit integration and other aspects have made wireless equipment smaller, cheaper, and more reliable. Wireless communication can operate in accordance with various standards such as IEEE 802.1 1x, Bluetooth, global system for mobile communications (GSM), code division multiple access (CDMA). As higher data throughput, density of networks, and other changes develop, newer standards are constantly being developed for adoption, such as a progression from IEEE 802.11n to IEEE 802.11ac, ax, or be. Network devices can operate as client stations (STAs), access points (APs), or mobile APs. Network devices may have a varying number of antenna according to a complexity and function thereof. However, additional antenna can increase system complexity such as based on interference therebetween.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGs. 1B and 1C are block diagrams depicting computing devices useful in connection with the methods and systems described herein, according to some embodiments.
FIG. 2 illustrates a spectrum coverage map for a wireless network, according to some embodiments.
FIG. 3 is a network diagram of a basic service set (BSS) interfacing with various overlapping basic service sets (OBSS), according to some embodiments.
FIG. 4 is a sequence diagram for communication between an access point (AP) and a non-AP in the presence of an OBSS communication detectable by the AP, and non-detectable by the non-AP, according to some embodiments.
FIG. 5 is a sequence diagram for communication between an AP and a non-AP in the presence of an OBSS communication detectable by the non-AP, and non-detectable by the AP, according to some embodiments.
FIG. 6 is a sequence diagram for communication between an AP and a non-AP in the presence of an OBSS communication detectable by the AP, and a different OBSS detectable by a non-AP, according to some embodiments.

The details of various embodiments of the methods and systems are set forth in the accompanying drawings and the description below.

### Detailed Description

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE P802.11n^{™}; and IEEE P802.11ac^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of access protocols and methods and devices using access protocols.

Various client devices can operate as station (STA) devices, employing multiple-link-single-radio (MLSR). For example, the client devices can employ MLSR radios for each of various bands (e.g., a 2.4GHz band, a 5GHz band, or a 6GHz band). A client device can operate as a mobile AP. During mobile AP operation, the client device can employ an MLSR radio to connect to one or more STA. For example, a client device can be configured to operate in STA and mobile AP modes of operation. Two such client devices can communicate via non-simultaneous transmit and receive (NSTR) links on one or more channels. For example, the two clients can operate between 2.4 GHz, 5 GHz, and 6 GHz links. The various devices can coordinate a link selection between a primary and non-primary links according to implicit or explicit methods. For example, a single radio can be associated with one or more links such that the single radio can communicate over a selected link and avoid interference over an unselected link.

A network can include arbitration or other methods to determine a transmit opportunity (TXOP) within a subnetwork, such as a basic service set (BSS) of devices including client devices (e.g., STAs) which can communicate via an access point (e.g., an AP or mobile AP). However, some networks can include overlapping BSS (OBSS). An OBSS communication may refer to a communication transmitted or received by a device of a first basic service set detected by a device of a second basic service set, in some embodiments. For example, the OBSS communication can be detected responsive to a clear channel assessment to determine if a wireless channel is available for transmission. For example, some networks can include overlapping BSS of a same extended service set (e.g., sharing an SSID) or of different service sets. Some network devices of a BSS can cause interference with one or more OBSS. Wireless devices can conduct a clear channel assessment (CCA) prior to a transmission to avoid interfering with other devices. For example, a wireless device can employ preamble detection (PD) to detect a message of an OBSS (OBSS-PD). Each radio can include a primary link, and at least one non-primary link (e.g., a secondary link). The primary link can carry beacon/probe response frames, data frames, and other communications. Responsive to an OBSS-PD, or an OBSS-PD exceeding a threshold, the wireless device can communicate over the non-primary link.

According to some embodiments, an AP (e.g., a mobile AP) or STA can explicitly arbitrate an operational link over a control channel. For example, each of the AP or STA can detect an OBSS communication on the primary link, and convey the information regarding the OBSS communication over the control channel. For example, the AP or STA can convey a time, size, duration, sending unit, receiving unit, energy, or the like. Each of the AP or STA can aggregate their own detected OBSS communications with detected OBSS communications of a corresponding device. Each of the AP or STA can thereafter transmit according to a logical AND of the availability of a link with respect to both of the AP and STA. For example, if a primary link is available to a transmitter-receiver pair, the AP and STA communicate via the primary channel. If the primary channel is unavailable and a non-primary channel is available for the transmitter-receiver pair, the AP and STA can communicate via the non-primary channel. If the primary channel and any non-primary channel is unavailable for the transmitter-receiver pair, the AP or STA can delay the transmission, transmit over a different band, adjust a channel, etc. The control channel can include a wired or wireless connection. For example, the control channel can include a 2.4GHz link or a 900 MHz link.

According to some embodiments, an AP (e.g., a mobile AP) or STA can implicitly arbitrate an operational link. An AP (e.g., a mobile AP) or STA can detect a same or different OBSS communication. For example, a location, position, OBSS-PD threshold or the like can cause one wireless device to determine that a primary link is unavailable, and the wireless device can transition to a secondary link. Upon a mutual detection of a same OBSS transmission, the corresponding wireless devices can communicate over a non-primary link. A non-mutual detection of an OBSS transmission can cause link selection differences between sending and receiving devices. For example, one of a transmitter-receiver pair can detect an OBSS communication and another of the transmitter-receiver pair may not detect the OBSS communication, or each of a transmitter-receiver pair can detect different OBSS communications. An AP or STA can precede a transmission by use of a CCA or an ready-to-send (RTS) clear-to-send (CTS) exchange. For example a transmitting unit can convey an RTS message indicating a readiness to send frames. Upon receipt of the RTS, the receiving unit can convey a CTS message. Upon a non-receipt of a CTS within a predetermined amount of time, the transmitter can determine that the receiver or the channel is unavailable, and schedule a retransmission for a later time, another link, another band, etc.

Some embodiments relate to a device. The device can include a first radio configured to transmit over a first link and a second link of a first wireless band. The first radio can detect an OBSS communication on the first link of the first wireless band. The first radio can transmit over the second link of the first wireless band, responsive to the detection of the OBSS communication on the first link of the first wireless band. The device can operate as an access point (AP) for one or more stations of a wireless network.

In some embodiments, the device includes a second radio configured to transmit over a first link and a second link of a second wireless band. The second radio can detect an OBSS communication on the second link of the second wireless band. The second radio can transmit over the second link of the second wireless band, responsive to the detection of the OBSS communication on the first link of the second wireless band. In some embodiments, the first radio and second radio include software defined radios. The first radio can transmit over the second wireless band. The second radio can transmit over the first wireless band. In some embodiments, the device can subdivide the first link into a third link and a fourth link. The first radio can transmit over one of the third link and the fourth link. The first radio can detect an OBSS communication on the third link of the first wireless band. The first radio can transmit over the fourth link of the first wireless band, responsive to the detection of the OBSS communication on the third link of the first wireless band.

In some embodiments, each link of the first wireless band is a wireless link equal to or greater than 20 MHz in the 5 GHz range. Each link of the second wireless band can be equal to or greater than 20 MHz in the 6 GHz range. In some embodiments, the device includes a third radio, separate from the first and second radio to monitor at least one of the first wireless band or the second wireless band. In some embodiments, the third radio can simultaneously monitor each of the first wireless band and the second wireless band. In some embodiments, the device includes a sideband link to communicate an availability of one of the first link or the second link. In some embodiments, the device can determine a duration of a first OBSS communication, based on the content of the detected OBSS communication. The device can determine a duration of a second OBSS communication, based on an ready-to-send (RTS) message received from one of the one or more stations of the wireless network. The device can compare the duration of the first OBSS communication to the duration of the second OBSS communication. The device can transmit a clear to send (CTS) indication to the one of the one or more stations of the wireless network, indicating a same duration as the RTS message, responsive to a determination that the duration of the first OBSS communication is equal to or greater than the duration of the second OBSS communication. The device can transmit a CTS indication including the first duration to the one of the one or more stations of the wireless network, indicating the first duration, responsive to a determination that the duration of the second OBSS communication is less than the duration of the first OBSS communication.

Some embodiments relate to a device. The device can include multiple radios. Each radio can monitor a plurality of links of a respective wireless band. Each radio can transmit over the plurality of links of the respective wireless band. Each radio can detect an unavailability of a primary link of the respective wireless band. Each of the plurality of radios can monitor a secondary link of the respective wireless band, responsive to the detected unavailability of the primary link. The device can operate as an access point (AP) for one or more stations of a wireless network.

In some embodiments, the multiple-link single-radios are software defined radios. In some embodiments, at least one of the devices can simultaneously monitor two or more links of the respective wireless band. In some embodiments, the device includes a further radio, configured to simultaneously monitor two or more links of at least one of the respective wireless bands. In some embodiments, the device includes a further radio can communicate an availability of one of the plurality of primary links or one of the plurality of secondary links.

Some embodiments relate to a method. The method can include monitoring, by a first radio of a device, a first link of a first wireless band. The method can include detecting, by the first radio, an OBSS communication on the first link of the first wireless band. The method can include monitoring, by the first radio, a second link of the first wireless band responsive to the detection of the OBSS communication. The method can include transmitting, by the first radio, over the second link of the first wireless band, responsive to the detection of the OBSS communication.

In some embodiments, the method can include monitoring, by a second radio of the device, a first link of a second wireless band. The method can include detecting, by the second radio, a second OBSS communication on the first link of the second wireless band. The method can include monitoring, by the second radio, a second link of the second wireless band responsive to the detection of the second OBSS communication. The method can include transmitting, by the second radio, over the second link of the first wireless band, responsive to the detection of the second OBSS communication. In some embodiments the method can include subdividing, by the device, the first link into a third link and a fourth link. The method can include monitoring, by the first radio, the third link. The method can include detecting, by the first radio, an OBSS communication on the third link. The method can include monitoring, by the first radio, the fourth link responsive to the OBSS communication on the third link.

In some embodiments, each link of the first wireless band is a wireless link equal to or greater than 20 MHz in the 5 GHz range, and each link of the second wireless band is equal to or greater than 20 MHz in the 6 GHz range. In some embodiments, the method includes simultaneously monitoring, by a third radio, separate from the first and second radio, each of the first wireless band and the second wireless band. In some embodiments, the method comprises communicating an availability of one of the first or the second link via a sideband link.

### A. Computing and Network Environment

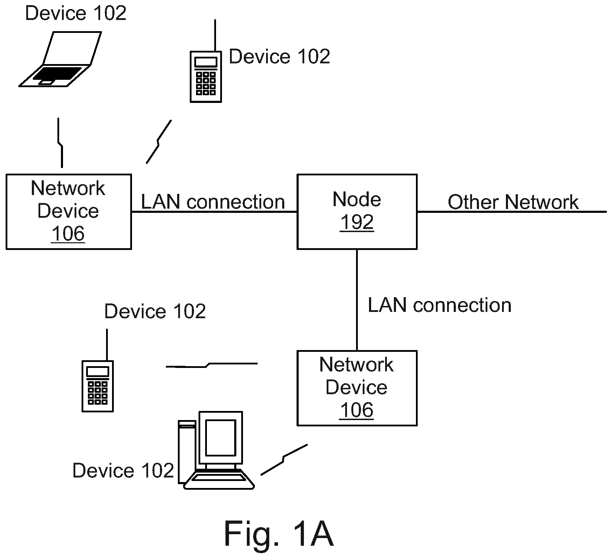

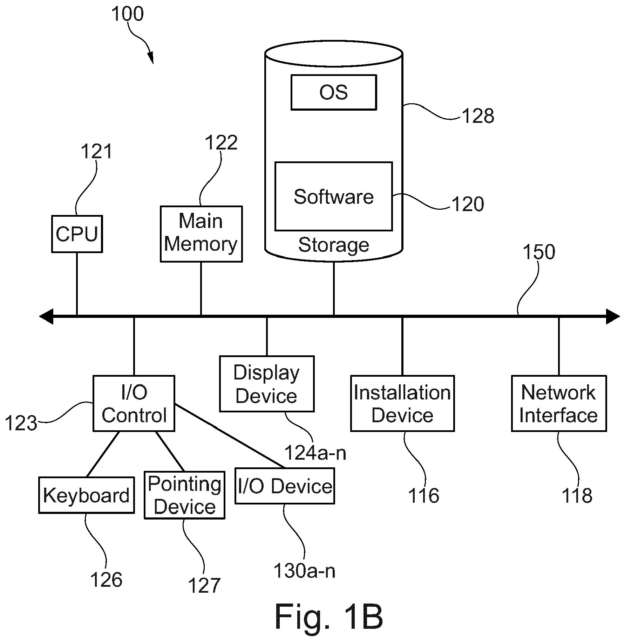

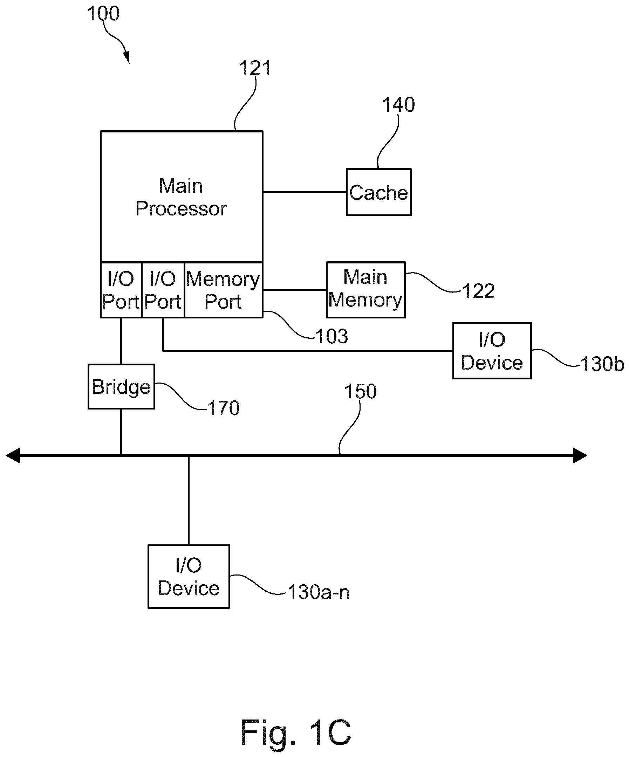

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.1 lad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Station and AP Communication

Disclosed herein are systems and a methods of enhanced multilink single radio operation. For example, an AP (e.g., a mobile AP) can employ a radio which transmits or receives frames for two or more links. The multi-link radio can alternate between one or more links to increase performance relative to single link operation. For example, a same radio can be associated with a primary and secondary link such that the radio can alternate between communicating over the links in response to network or device availability. Such a device can limit cross-talk between radios, relative to simultaneous transmit/receive devices. According to some embodiments, the radio can send or receive control channel communications to coordinate an active link of the primary or secondary link. According to some embodiments, the radio can implicitly determine a primary or secondary link based on detected messages or behavior of other network nodes.

A "STA" may refer to any device for communicating in communication system and includes but is not limited to a fixed, portable, or mobile laptop, desktop personal computer, personal digital assistant, access point, work station, wearable device, smart phone, or Wi-Fi phone in some embodiments. An "access point" (AP) may refer to a device for communicatively coupling one or more "non-AP" devices (e.g., a client device) to a network in some embodiments. More specifically, an AP may enable non-AP devices to connect and communicate with a network. In some embodiments an AP may be a "wireless access point" (WAP) configured to enable wireless communication between non-AP devices. An AP includes but is not limited to a mobile, portable, or fixed hot spot, router, bridge, or other communication device.

A radio may refer to a device to wirelessly communicate data, in some embodiments. A band may refer to a predefined portion of wireless spectrum, in some embodiments. For example a wireless band can include contiguous spectrum according to as standard such as 5030-5990 MHz, 5945-7125 MHz, 2401-2495 MHz, or the like. A "link" may refer to a subdivision of a band for wireless communication between radios or another channel for communication such as a wired link for communication (e.g., Ethernet). The link can include a frequency subdivision, time-subdivision, combination thereof, or the like. A multiple-link-single-radio (MLSR) may refer to a radio configured to selectively operate over at least two links (e.g., two links of at least one band). For example, the MLSR radio can operate over the links responsive to wireless spectrum congestion, or to increase throughput by alternating transmissions or receptions therebetween. For example, an MLSR may operate over a primary link, a secondary link, and so on. A primary link may refer to a default, initial, or first link available to a device, such as a device including an MLSR radio in some embodiments. A secondary link may refer to a non-default, alternate, or second link available to a device, such as a device including an MLSR radio in some embodiments. An overlapping basic service set (OBSS) communication may refer to a communication transmitted or received by a device of a first basic service set detected by a device of a second basic service set in some embodiments. Simultaneous monitoring (e.g., of bands or links) may refer to a radio monitoring multiple bands or links such that an existence or a content of a wireless message on any of the bands or links can be detected, in some embodiments. Content of a message may refer to information in a body of a message, header of a message, preamble of a message, or the like in some embodiments.

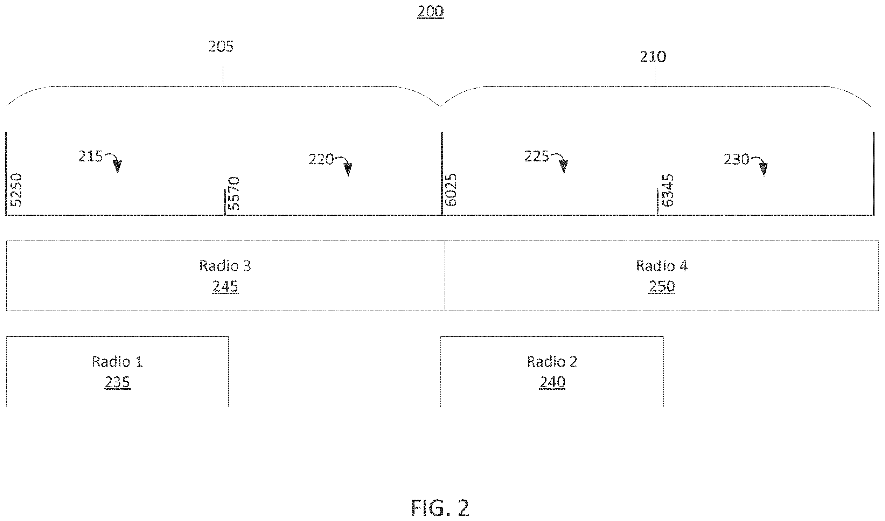

With reference to FIG. 2, a spectrum coverage map 200 for a wireless network is illustrated, according to some embodiments. A first band 205 such as a 5 GHz band of a wireless network can include a first link 215. The first link 215 can be a primary link for the first band 205 of the wireless network. The first link 215 can be a 160 MHz channel centered about 5250 MHz (e.g., channel 50). The first band 205 can include a second link 220. The second link 220 can be a secondary link for the first band 205 of the wireless network. The second link 220 can be a 160 MHz channel centered about 5570 MHz (e.g., channel 114). A second band 210 such as a 6 GHz band of a wireless network can include a third link 225. The third link 225 can be a primary link for the second band 210 of the wireless network. For example, the third link 225 can be a 160 MHz channel centered about 6025 MHz. The second band 210 can include a fourth link 230. The fourth link 230 can be a secondary link for the second band 210 of a wireless network. For example, the fourth link 230 can be a 160 MHz channel centered about 6345 MHz. The illustrated example is not intended to be limiting. According to various embodiments some bands, links, or radios can be added, omitted, or substituted. For example, a radio for a 2.4 GHz band can be added, a radio for a 6 GHz band can be omitted, or one or more links can be configured with a different center frequency or bandwidth. A tertiary link, quaternary link, or so on can be defined for each band. Such non-primary links may also be referred to, generally, as "secondary" links. A radio can be added to monitor, or communicate over one or more bands. For example, an MLSR radio can alternate between more than two bands, or more than one radio per band can be included.

A first radio 235 can be configured to monitor, transmit frames on, or receive frames from a link. For example, the first radio 235 can monitor a primary link of the first band 205. The first radio 235 can be a radio of a STA or an AP (e.g., a mobile AP). The first radio 235 can communicate with various devices of a wireless network. The first radio 235 can detect an OBSS-PD or other communication on the first link 215. Responsive to a detection of the OBSS-PD or other communication, the first radio 235 can monitor the second link 220. The first radio 235 can convey an indication of a transition to the second link 220. For example, the first radio 235 can convey the indication via the control channel (not depicted). The second radio 240 can alternate between the third link 225 and the fourth link 230 in a similar manner as the first radio 235 alternates between the first link 215 and the second link 220. In some embodiments, the first link 215, the second link 220, the third link 225, or the fourth link 230 can be subdivided into constituent links or additional links can be defined for each band. Various radios can monitor one or more links. For example, the first radio 235 can monitor the constituent or additional links, or additional radios can monitor additional links.

A third radio 245 or a fourth radio 250 can monitor links not monitored by the first radio 235 or the second radio 240. For example, the third radio 245 can detect a transmission addressed to an address associated with the first radio 235, and convey an indication for the first radio 235 to monitor the unmonitored link. For example, a device in network communication with the first radio 235 can detect an OBSS communication in the primary link (e.g., the first link 215), transition to a secondary link (e.g., the second link 220), and transmit to the first radio 235 over the secondary link. The first radio 235 can fail to detect the OBSS communication, and continue to monitor the primary link. The third radio 245 can detect the transmission for the first radio 235 (e.g., an RTS message), and convey an indication to the first radio 235 to monitor the secondary link, or transmit a response to the transmission for the first radio 235 (e.g., transmit a CTS message). The various radios can transmit frames having a duration equal to or less than a detected duration of the OBSS communication. The various radios can detect the duration of an OBSS communication according to a PHY preamble, a MAC header, packet type, or another identifier of a packet (e.g., inter-packet duration information).

Each of the first radio 235, the second radio 240, the third radio 245, or the fourth radio 250 can include or interface with an antennae, amplifier, analog to digital converter, or other portions of a chain of radio frequency (RF) conversion circuitry. One or more radios can share one or more components of an RF chain. In some embodiments, the third radio 245 and the fourth radio 250 can share an RF chain different from the RF chain of the first radio 235 and the second radio 240 to simultaneously monitor the first band 205 and the second band 210. In some embodiments, the first radio 235 and the third radio 245 can share an RF chain separate from the second radio 240 and the fourth radio 250. In some embodiments, the second radio 240 and the fourth radio 250 can share an RF chain separate from the first radio 235 and the third radio 245. In some embodiments the third radio 245 and the fourth radio 250 can be omitted. For example, the secondary link can remain unmonitored in the absence of an OBSS communication detected on the primary link. The various radios can connect to one or more processors or other logic devices. Communication between the respective radios of a device can refer to conveyances of information associated with the respective links at the one or more processors.

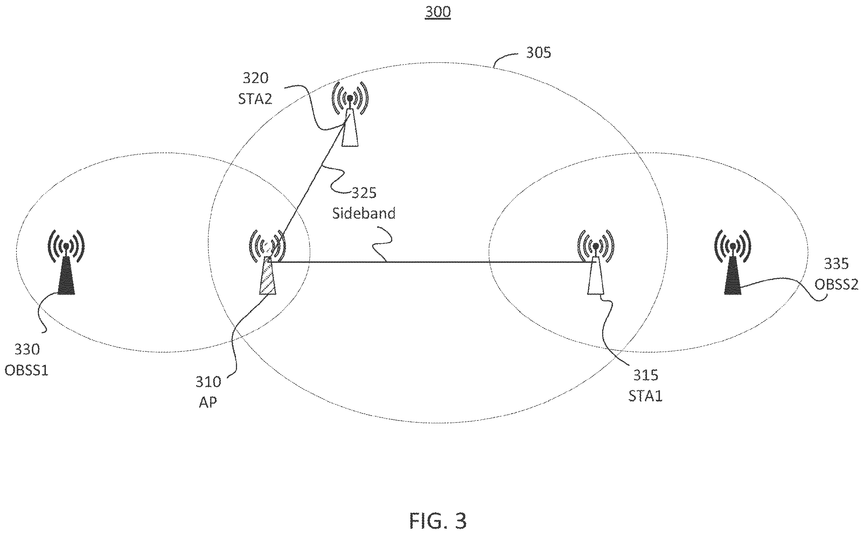

FIG. 3 is a network diagram 300 of a BSS 305 interfacing with various overlapping basic service sets (OBSS), according to some embodiments. The BSS 305 can include an AP 310 (e.g., a mobile AP 310) and one or more STAs (e.g., non-APs). For example, the BSS 305 can include a first STA 315 or a second STA 320. The various devices of a BSS 305 can detect OBSS communication of one or more OBSS according to a position, gain, or other characteristics thereof. For example, an AP 310 can detect OBSS communication from a first OBSS 330, or a first STA 315 can detect OBSS communication from a second OBSS 335. One or more sideband links 325 can interconnect various devices of the BSS 305. For example, the sideband links 325 can be a different wireless link on a same or different wireless band of a same wireless network (e.g., a 2.4 GHz band).

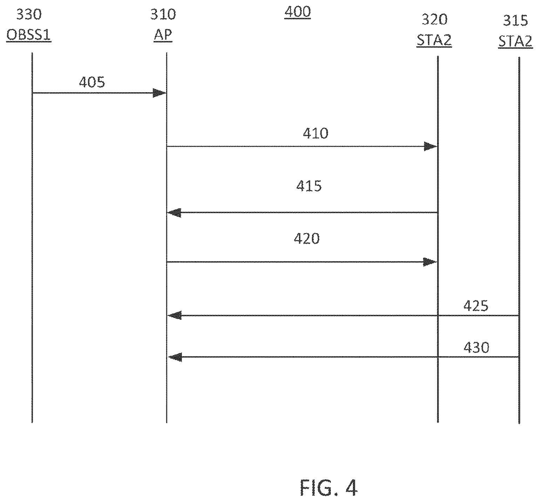

The first OBSS 330 or the second OBSS 335 can include various AP or STA devices. The OBSS communication can include uplink transmissions, downlink transmissions, broadcast messages, ad hoc messages, or the like. The BSS 305 can include a primary link and secondary link of a band of a wireless network. Hereinafter, at FIGs. 4-8, various elements of FIG. 3 are referred to as an example of a wireless network for sequence diagrams. Such references are merely to provide an example embodiment, and are not limiting. For example, various networks can include additional, fewer, or different devices, sideband links 325 (e.g., wired or wireless links), etc. For example, some embodiments, can employ sideband communication between the BSS 305 and various OBSS. Further, some OBSS can be detected by both the AP 310 and an STA in communication therewith. For example, the AP 310 and STA can transition to a secondary link and continue communication.

FIG. 4 is a sequence diagram 400 for communication between an AP 310 (e.g., a mobile AP) and a STA (e.g., a non-AP) in the presence of an OBSS communication detectable by the AP, and non-detectable by the STA, according to some embodiments. Such a sequence can be demonstrated with respect to, for example, the AP 310, the first OBSS 330, and the second STA 320 of FIG. 3.

At operation 405, an AP 310 detects a communication from the first OBSS 330. For example, the communication can be detected on a primary link of the AP 310. Responsive to the detection, the AP 310 can transition to a non-primary link (e.g., a secondary link). Thereafter, at operation 410, the AP 310 can initiate a frame exchange with the second STA 320 over the secondary link. The frame exchange initiation may include a CCA operation, for example, as part of an 802.11 EDCA function followed by an RTS. The second STA 320 can respond to the RTS with a CTS at operation 415. Upon receipt of the CTS, the AP 310 can determine that the secondary link is available and that the second STA 320 is a multi-link STA, and proceed with communication over the secondary link at operation 420.

During communication between the AP 310 and the second STA 320, a non-AP device such as the first STA 315 can attempt to initiate a frame exchange with the AP 310 over the primary link. For example, at operation 425, the first STA 315 can transmit to the AP 310. The transmission can be either a RTS or a data frame, responsive to conducting CCA as part of an 802.11 EDCA function, which does not detect the first OBSS 330. The AP 310 can fail to receive either of the RTS or data frame, or fail to respond to the RTS or data frame (e.g., may not acknowledge the frame or may not reply with a CTS). In either case, the first STA 315 can determine that the primary link or the AP 310 is unavailable, and defer the transmission for a later time, at operation 430.

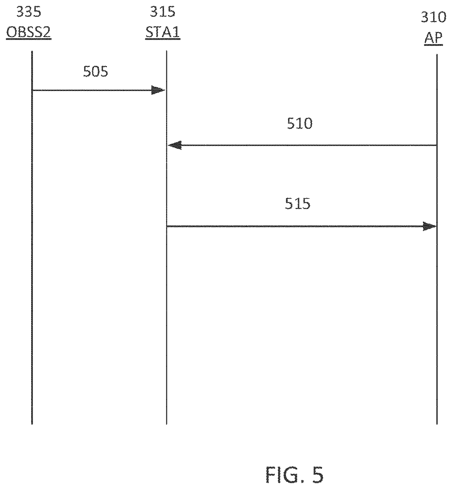

FIG. 5 is a sequence diagram 500 for communication between an AP 310 (e.g., a mobile AP) and a STA (e.g., a non-AP) in the presence of an OBSS communication detectable by the STA, and non-detectable by the AP, according to some embodiments. Such a sequence can be demonstrated with respect to, for example, the AP 310, the second OBSS 335, and the first STA 315 of FIG. 3.

At operation 505, a non-AP such as the first STA 315 detects a communication from the second OBSS 335. For example, the first STA 315 can detect the communication on the primary link. Responsive to the detection, the first STA 315 can transition to a non-primary link (e.g., a secondary link). Thereafter, at operation 510, the first STA 315 can send an RTS over the secondary link. The AP 310 can fail to receive or disregard the RTS based on the use of the secondary link in the absence of a detected OBSS communication on the primary link by the AP 310. Conversely, at operation 515, an RTS sent by the AP 310 to the first STA 315 can be not received or disregarded by the first STA 315 based on the use of the primary link in the presence of a detected OBSS communication on the primary link by the first station 315. Upon a failure to receive a CTS, either device can defer, for example, based on 802.11 EDCA protocol, and then attempt a retransmission (not depicted) as permitted by the protocol.

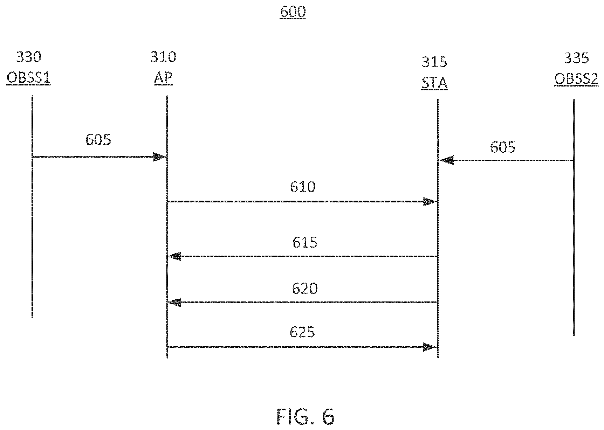

FIG. 6 is a sequence diagram 600 for communication between an AP 310 (e.g., a mobile AP) and a STA (e.g., a non-AP) in the presence of an OBSS communication detectable by the AP, and a different OBSS detectable by the STA, according to some embodiments. Such a sequence can be demonstrated with respect to AP 310, the first STA 315, the first OBSS 330, or the second OBSS 335.

At operation 605, each of an AP 310 and a non-AP (e.g., the first STA 315) can detect a different OBSS on the primary link. The OBSS detected by the AP 310 and the first STA 315 can have different durations associated therewith. For example, the AP 310 can detect a first OBSS 330 having a first duration, and the first STA 315 can detect a second OBSS 335 having a second duration. Responsive to the detection, both the AP 310 and the non-AP can transition to a non-primary link. Thereafter, the sequence can proceed to operation 610, at which the AP 310 can initiate a frame exchange with the first STA 315, or operation 615, at which the first STA 315 can initiate a frame exchange with the AP 310. At operation 620, responsive to receiving the RTS of operation 610, the first STA 315 can send an CTS indicating a same duration as the RTS if the OBSS duration detected by the first STA 315 is equal to or greater than the duration the first STA 315 receives via the RTS. At operation 625, responsive to receiving the RTS of operation 615, the AP 310 can send an CTS indicating a same duration as the RTS if the OBSS duration detected by the AP 310 is equal to or greater than the duration the AP 310 receives via the RTS. With further reference to operation 625, responsive to receiving the RTS of operation 615, the AP 310 can send an CTS indicating the first duration (e.g., a lesser duration than the RTS), responsive to determining that the OBSS detected by the first AP 310 is less than the duration received via the RTS. Thereafter, the first STA 315 can adopt the lesser first duration for frame exchanges with the AP 310.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A device comprising
a first radio configured to transmit over a first link and a second link of a first wireless band,
the first radio configured to detect an overlapping basic service set (OBSS) communication on the first link of the first wireless band; and
the first radio configured to transmit over the second link of the first wireless band, responsive to the detection of the OBSS communication on the first link of the first wireless band;
wherein the device is configured to operate as an access point (AP) for one or more stations of a wireless network.

2. The device of claim 1, further comprising
a second radio configured to transmit over the first link and the second link of a second wireless band;
the second radio configured to detect an OBSS communication on the second link of the second wireless band; and
the second radio configured to transmit over the second link of the second wireless band, responsive to the detection of the OBSS communication on the first link of the second wireless band.

3. The device of claim 2, wherein
the first radio and second radio comprise software defined radios the first radio can transmit over the second wireless band and the second radio can transmit over the first wireless band.

4. The device of claim 3, wherein
the device is configured to subdivide the first link into a third link and a fourth link;
the first radio is configured to transmit over one of the third link and the fourth link;
the first radio is configured to detect an OBSS communication on the third link of the first wireless band; and
the first radio is configured to transmit over the fourth link of the first wireless band, responsive to the detection of the OBSS communication on the third link of the first wireless band;
and/or wherein
each link of the first wireless band is a wireless link equal to or greater than 20 MHz in the 5 GHz range, and each link of the second wireless band is equal to or greater than 20 MHz in the 6 GHz range.

5. The device of any one of the preceding claims 2 to 4, further comprising
a third radio, separate from the first and second radio to monitor at least one of the first wireless band or the second wireless band;
wherein in particular
the third radio is configured to simultaneously monitor each of the first wireless band and the second wireless band.

6. The device of any one of the preceding claims, further comprising
a sideband link to communicate an availability of one of the first link or the second link.

7. The device of any one of the preceding claims, wherein the device is further configured to:
determine a duration of a first OBSS communication, based on content of the detected OBSS communication;
determine a duration of a second OBSS communication, based on an RTS message received from one of the one or more stations of the wireless network;
compare the duration of the first OBSS communication to the duration of the second OBSS communication;
transmit a clear to send (CTS) indication to the one of the one or more stations of the wireless network, indicating a same duration as the RTS message, responsive to a determination that the duration of the first OBSS communication is equal to or greater than the duration of the second OBSS communication; and
transmit a CTS indication including the duration of the first OBSS communication to the one of the one or more stations of the wireless network, indicating the duration thereof, responsive to a determination that the duration of the second OBSS communication is less than the duration of the first OBSS communication.

8. A device, comprising
a plurality of radios, each radio configured to monitor a plurality of links of a respective wireless band, and to transmit over the plurality of links of the respective wireless band; wherein
each of the plurality of radios is configured to detect an unavailability of a primary link of the respective wireless band;
each of the plurality of radios is configured to monitor a secondary link of the respective wireless band, responsive to the detected unavailability of the primary link; and wherein the device is configured to operate as an access point (AP) for one or more stations of a wireless network.

9. The device of claim 8, wherein
each of the plurality of radios is a software defined radio;
and/or wherein
at least one of the plurality of radios is configured to simultaneously monitor two or more links of the respective wireless band.

10. The device of claim 8 of 9, further comprising
a further radio, separate from the plurality of radios, configured
to simultaneously monitor two or more links at least one of the respective wireless bands; and/or
to communicate an availability of one of the plurality of primary links or one of the plurality of secondary links.

11. A method comprising
monitoring, by a first radio of a device, a first link of a first wireless band;
detecting, by the first radio, an OBSS communication on the first link of the first wireless band;
monitoring, by the first radio, a second link of the first wireless band responsive to the detection of the OBSS communication;
transmitting, by the first radio, over the second link of the first wireless band, responsive to the detection of the OBSS communication.

12. The method of claim 11, further comprising
monitoring, by a second radio of the device, the first link of a second wireless band;
detecting, by the second radio, a second OBSS communication on the first link of the second wireless band;
monitoring, by the second radio, the second link of the second wireless band responsive to the detection of the second OBSS communication;
transmitting, by the second radio, over the second link of the first wireless band, responsive to the detection of the second OBSS communication.

13. The method of claim 12, further comprising
subdividing, by the device, the first link into a third link and a fourth link;
monitoring, by the first radio, the third link;
detecting, by the first radio, an OBSS communication on the third link; and
monitoring, by the first radio, the fourth link responsive to the OBSS communication on the third link.

14. The method of claim 12 or 13, wherein
each link of the first wireless band is a wireless link equal to or greater than 20 MHz in the 5 GHz range, and each link of the second wireless band is equal to or greater than 20 MHz in the 6 GHz range.

15. The method of any one of the claims 12 to 14, further comprising
simultaneously monitoring, via a third radio, separate from the first and second radio each of the first wireless band and the second wireless band;
and/or
communicating an availability of one of the first link or the second link via a sideband link.
